# FASCICULE DE BREVET EUROPEEN

(11) **EP 2 419 288 B1**
(45) Date de publication et mention de la délivrance du brevet: **23.03.2016**
(21) Numéro de dépôt: 10723657.2
(22) Date de dépôt: 12.04.2010
(51) Int. Cl.: B60J 1/20, B32B 17/10

(54) **VITRAGE A PROPRIETE D'AMORTISSEMENT VIBRO-ACOUSTIQUE AMELIORE, PROCEDE DE FABRICATION D'UN TEL VITRAGE ET PROCEDE DE PROTECTION ACOUSTIQUE DANS UN HABITACLE DE VEHICULE**
GLASPLATTE MIT VERBESSERTEN VIBROAKUSTISCHEN DÄMPFUNGSEIGENSCHAFTEN, VERFAHREN ZUR HERSTELLUNG EINER DERARTIGEN GLASPLATTE UND SCHALLSCHUTZVERFAHREN FÜR DEN INSASSENRAUM EINES FAHRZEUGES
GLASS PANEL WITH IMPROVED VIBROACOUSTIC DAMPING PROPERTIES, METHOD FOR MANUFACTURING SUCH A GLASS PANEL, AND METHOD FOR ACOUSTIC PROTECTION IN A VEHICLE PASSENGER COMPARTMENT

(30) Priorité: 16.04.2009 FR 0952480
(43) Date de publication de la demande: 22.02.2012
(73) Titulaire: Saint-Gobain Glass France, 92400 Courbevoie (FR)
(72) Inventeur: PAYOT, Sylvain, SARATOGA SPRINGS NY 12866 (US); FOURNIER, David, F-60120 Breteuil (FR)
(74) Mandataire: Galdeano, Sophie Marie
(86) Numéro de dépôt international: PCT/FR2010/050701
(87) Numéro de publication internationale: WO 2010/119217

(56) Documents cités:
- WO-A2-2004/012952
- DE-A1- 2 912 625
- FR-A1- 2 857 911
- FR-A1- 2 914 589

## Description

La présente invention concerne un vitrage à propriété d'amortissement vibro-acoustique améliorée qui comporte un dispositif d'amortissement vibro-acoustique, ainsi qu'un procédé de réduction de la gêne acoustique et vibratoire dans un habitacle, en particulier un habitacle mobile tel qu'un véhicule, notamment un véhicule automobile.

Outre les véhicules automobiles ou autres types de véhicules tels que les camions, cars, matériels agricoles, l'invention s'applique à tous types d'engins de locomotion présentant un habitacle fermé ou sensiblement fermé, tels que les avions, les trains, les bateaux , les sous-marins...

Les vitrages associés aux véhicules, notamment les véhicules automobiles, sont pourvus de moyens d'amortissement vibro-acoustique qui servent à amortir les ondes vibratoires se propageant au travers du vitrage en vue d'améliorer le confort acoustique à l'intérieur des véhicules.

Dans un véhicule automobile, les sources de désagrément d'origine mécanique, thermique, de visibilité, etc. ont été peu à peu maîtrisées. Mais l'amélioration du confort acoustique reste toujours d'actualité.

Les bruits d'origine aérodynamique, c'est-à-dire créés par le frottement de l'air sur le véhicule en déplacement, ont pu, au moins en partie, être eux-mêmes traités à leur source : pour économiser l'énergie, les formes ont été modifiées en améliorant la pénétration dans l'air et en diminuant les turbulences qui sont elles-mêmes source de bruits. Parmi les parois d'un véhicule qui séparent la source de bruits aérodynamiques extérieure de l'espace intérieur où se trouve le passager, les vitrages sont évidemment les plus difficiles à traiter.

Il est à présent connu de proposer des vitrages feuilletés dont l'intercalaire en matière thermoplastique est choisi de manière adaptée pour présenter des propriétés améliorées d'amortissement vibro-acoustique.

Le brevet européen EP-B1-0 387 148 propose ainsi des vitrages feuilletés qui réalisent une bonne isolation contre les bruits en particulier d'origine aérodynamique, c'est-à-dire à haute fréquence, entre 800 et 10 000 Hz.

En outre, de tels vitrages feuilletés permettent d'éviter une chute brutale à la fréquence critique des pertes par transmission (transmission loss) qui sont représentatives de l'isolement acoustique. La fréquence critique est propre à la composition du vitrage (masse volumique et module d'Young des éléments constitutifs, épaisseurs) et correspond à une coïncidence spatiale et fréquentielle des ondes de flexion dans le vitrage et des ondes acoustiques dans le fluide enveloppant le vitrage tel que l'air. Elle est typiquement aux environs de 4000 Hz pour un vitrage avoisinant les 3 mm d'épaisseur.

C'est à cette fréquence critique, qui est située dans la plage de fréquences particulièrement audibles par l'oreille humaine (entre 1000 et 6000 Hz), que les bruits peuvent donc être accrus. Il est donc souhaitable d'avoir une bonne performance d'isolement aux bruits à cette fréquence.

Une solution alternative (car certains vitrages ne sont pas feuilletés) ou complémentaire à l'utilisation de vitrages feuilletés à propriété d'amortissement vibro-acoustique peut consister à associer à la périphérie du vitrage et entre le vitrage et la carrosserie, un profilé à propriété d'amortissement vibro-acoustique qui est rendu solidaire du vitrage et de la carrosserie et qui consiste en une juxtaposition ou non de plusieurs matériaux amortissants.

Le document FR2857911 est relatif à un profilé pour vitre fixe telle que lunette arrière, pare-brise ou une custode, étroitement associée par collage à la carrosserie d'un véhicule. Ce profilé de garniture à bourrelet d'étanchéité est destiné à habiller le pourtour d'une vitre fixe. Il est réalisé à partir d'un matériau suffisamment souple pour lui permettre de se déformer, se comprimer ou se plier, le rendant ainsi apte à obturer un interstice entre une vitre et la tôle de la carrosserie du véhicule. Il concilie une étanchéité totale de l'interstice permettant une compensation efficace des tolérances et un aspect esthétique sensiblement plat de l'ensemble monté qui procure en outre un grain acoustique.

De la demande de brevet WO 04/012952, on connaît un profilé qui, pour assurer une telle propriété d'amortissement vibro-acoustique, doit présenter une raideur linéique réelle équivalente K'eq au moins égale à 25 MPa, en combinaison à un facteur de perte équivalent tan□eq au moins égal à 0,25. La raideur linéique équivalente est la raideur équivalente du profilé rapportée à un mètre linéaire de profilé, la raideur étant caractérisée par la rigidité (principalement le module d'Young pour un travail en traction-compression) des matériaux constituant le profilé et par la géométrie du profilé.

Dans ce type de profilé, seules sont prises en compte les contraintes et déformations subies par les matériaux selon un travail en traction-compression dans la direction normale au vitrage, le travail en cisaillement étant négligeable. En effet, la carrosserie est tellement rigide par rapport au profilé qu'elle ne se déforme pas et ne peut pas absorber l'énergie vibratoire. Seul le profilé se déforme de manière significative et dissipe de l'énergie mécanique par un travail en traction compression principalement.

Ce type de profilé amortissant, constituant également le joint périphérique du vitrage, convient donc car il assure la liaison entre le vitrage et la carrosserie. Cependant, tous les vitrages d'un véhicule ne sont pas fixés sur toute leur périphérie dans la carrosserie, certains tels que les vitrages latéraux ouvrants sont mobiles. Aussi cette configuration de joint périphérique assurant le rôle de moyen d'amortissement ne peut pas convenir pour ces derniers vitrages.

Par ailleurs, pour les vitrages latéraux ouvrants, une contrainte de mobilité s'ajoute. En effet, le vitrage doit pouvoir coulisser dans une fente de la carrosserie du véhicule, par exemple dans la portière, entre une position ouverte et une position fermée.

Il y a donc un besoin pour un vitrage permettant d'amortir les bruits tout en prenant peu de place.

Pour cela, l'invention propose un vitrage à propriété d'amortissement vibro-acoustique amélioré, comprenant :
- au moins une feuille de verre,
- au moins un profilé d'amortissement vibro-acoustique, le profilé comprenant au moins un élément en matériau amortissant et le profilé étant solidarisé avec une des faces de la feuille de verre,
la face du profilé faisant face à la feuille de verre ayant une surface en contact avec la feuille de verre qui est strictement inférieure à la surface de ladite face du profilé faisant face à la feuille de verre.

Selon une autre particularité, la surface de profilé en contact avec la feuille de verre est supérieure à 25% de la surface de la face de profilé faisant face à la feuille de verre.

Selon une autre particularité, la surface de profilé en contact avec la feuille de verre est égale à environ 70% de la surface de la face de profilé faisant face à la feuille de verre.

Selon une autre particularité, l'élément en matériau amortissant présente un facteur de perte supérieur à 0,2 et un module d'Young supérieur à 800 MPa, à 20°C pour une fréquence particulière *fₚ* correspondant à la fréquence critique du vitrage à plus ou moins 30 % près.

Selon une autre particularité, le profilé n'est associé à aucun autre dispositif à l'opposé de la feuille de verre.

Selon l'invention, le profilé s'étend sur au plus la longueur du vitrage.

Selon une autre particularité, le profilé comporte une pluralité d'éléments en matériau amortissant.

Selon une autre particularité, le vitrage comprend plusieurs profilés associés à la même face du vitrage et/ou à deux faces opposées du vitrage.

Selon une autre particularité, le profilé comporte au moins un élément en matériau amortissant, et un élément intercalaire rigide qui est agencé entre l'élément en matériau amortissant et la feuille de verre, l'élément intercalaire rigide présentant un facteur de perte inférieur à 0,2 et un module d'Young supérieur à 1600 MPa, à 20°C pour la fréquence particulière choisie *fₚ*.

Selon une autre particularité, le profilé comprend, sur sa face faisant face à la feuille de verre, des moyens de collage du type adhésif double-face.

L'invention concerne également un véhicule, notamment un véhicule automobile, comprenant une carrosserie et un vitrage tel que décrit plus haut, le profilé étant caché à la vue dans la carrosserie.

Selon une autre particularité, le vitrage est un vitrage latéral ouvrant.

L'invention concerne également un procédé de fabrication d'un vitrage tel que décrit plus haut, en vue de la réduction de la gêne acoustique et vibratoire dans un habitacle de véhicule, notamment de véhicule automobile, comportant un tel vitrage, le procédé comprenant les étapes suivantes :
- la fourniture d'un vitrage comprenant au moins une feuille de verre ;
- la fourniture d'au moins un profilé d'amortissement vibro-acoustique comprenant au moins un élément en matériau amortissant
- la solidarisation du profilé sur au plus la longueur dudit vitrage et à au moins l'une des faces du vitrage de façon à ce que la face du profilé d'amortissement vibro-acoustique faisant face à la feuille de verre ait une surface en contact avec la feuille de verre qui est strictement inférieure à la surface de ladite face du profilé faisant face à la feuille de verre.

D'autres détails et avantages de l'invention vont à présent être décrits, en regard des dessins annexés sur lesquels :
- la figure 1 est une vue en perspective d'un vitrage selon l'invention, pourvu d'un profilé ;
- la figure 2 est une vue partielle en coupe du vitrage de la figure 1 ;
- les figures 3 à 5 sont des vues partielles en coupe de vitrages selon l'invention, pourvus de différentes variantes de profilé ;
- la figure 6 est une vue partielle en coupe d'un vitrage selon l'invention, pourvu de deux profilés disposés sur deux faces opposées du vitrage ;
- la figure 7 est une vue partielle en perspective d'un vitrage selon l'invention, pourvu de deux profilés disposés sur une même face du vitrage ;
- la figure 8 est une vue en perspective d'un vitrage selon l'invention pourvu d'une variante supplémentaire de profilé ;
- la figure 9 montre des courbes comparatives d'isolement acoustique brut entre un vitrage nu et un vitrage selon l'invention, pourvu d'un profilé, avec des épaisseurs de verre identiques ;
- la figure 10 montre des courbes comparatives d'isolement acoustique brut entre un vitrage nu de 3,85 mm d'épaisseur et un vitrage selon l'invention, avec 3,15 mm d'épaisseur de verre, pourvu d'un profilé.

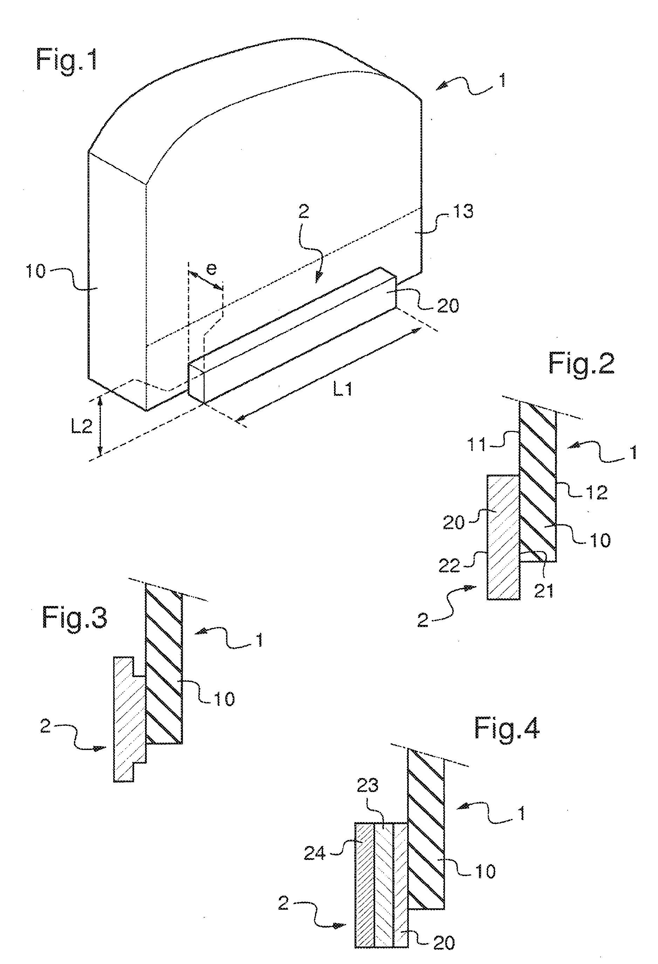

Les figures 1 à 8 ne sont pas des vues à l'échelle pour en faciliter la compréhension. De plus, les références qui sont identiques sur les différentes figures représentent des éléments identiques ou similaires.

L'invention concerne un vitrage à propriété d'amortissement vibro-acoustique amélioré, comprenant au moins une feuille de verre et au moins un profilé d'amortissement vibro-acoustique comprenant au moins un élément en matériau amortissant. Ainsi, le vitrage permet d'amortir les bruits.

Le profilé est solidarisé avec une des faces de la feuille de verre. La face du profilé faisant face à la feuille de verre a une surface en contact avec la feuille de verre qui est strictement inférieure à la surface de ladite face du profilé faisant face à la feuille de verre.

Ainsi, une partie du profilé n'est pas solidarisée à la feuille de verre et est en dehors de la surface de la feuille de verre. Cette partie du profilé dépasse donc du bord de la feuille de verre. De cette façon, le profilé ne prend que peu de place sur la feuille de verre. L'ensemble du profilé peut aisément être disposé sous le joint lécheur d'un cadre de vitre de véhicule, même lorsque la vitre est en position fermée.

Le vitrage selon l'invention permet donc bien d'amortir les bruits tout en prenant peu de place.

Les figures 1 et 2 illustrent un vitrage 1 comportant au moins une feuille de verre 10 sur lequel au moins un profilé 2 est solidarisé. Le profilé 2 est solidarisé à la feuille de verre de façon à ce que la surface de profilé en contact avec la feuille de verre soit strictement inférieure à la surface totale de la face du profilé faisant face à la feuille de verre. Le profilé 2 est par exemple parallélépipédique.

Sur l'ensemble des figures, une seule feuille de verre est représentée. Toutefois, le vitrage selon l'invention peut être feuilleté et comprendre deux feuilles de verre entre lesquelles une feuille intercalaire plastique est prise en sandwich. Pour une facilité de compréhension, on ne parlera dans la suite de la description que d'une feuille de verre, sans que cela soit à comprendre comme une limitation.

Le vitrage 1 est destiné à être logé dans une carrosserie de véhicule, tel qu'un véhicule automobile, par exemple dans un caisson de portière, pour former une vitre latérale, avantageusement un vitrage latéral ouvrant.

Le vitrage 1 présente deux faces opposées 11 et 12. Une des faces 11 est destinée à être en regard de l'intérieur du véhicule, tandis que l'autre face 12 sera tournée vers l'environnement extérieur. Le profilé est de préférence solidarisé à la face extérieure de la feuille de verre, pour des raisons de place disponible à l'intérieur de la carrosserie du véhicule.

De plus, le vitrage 1 comporte une partie marginale 13, délimitée par les pointillés sur la figure 1. Cette partie marginale est destinée à se trouver dans la carrosserie d'un véhicule, une fois le vitrage 1 muni du profilé monté sur un véhicule. La partie marginale 13 est appelée bande basse dans le cas d'un vitrage ouvrant latéral. La partie marginale 13 est ainsi de préférence en partie basse du vitrage lorsque le vitrage est monté sur un véhicule. La partie marginale 13 est destinée à ne pas être visible car destinée à être logée dans la carrosserie pour la fixation du vitrage sur le système de lève-vitre. La partie marginale 13 se trouve alors en dessous du joint lécheur de vitre, situé en bas du cadre de vitre, et cela quel que soit le degré d'ouverture ou de fermeture de la vitre.

La partie du profilé 2 solidarisée à la feuille de verre 10 est solidarisée à la partie marginale 13. Ainsi, le profilé 2 est caché à la vue lorsque le vitrage est monté sur un véhicule.

Le profilé 2 dépasse du bord de la feuille de verre 10, comme cela est visible en particulier sur la figure 2. Cela permet un gain de place sur la partie marginale 13. La surface de profilé 2 solidarisée avec la feuille de verre 10 est de préférence supérieure à 25% et strictement inférieure à 100% de la surface de la face de profilé faisant face à la feuille de verre.. Ainsi, la surface en contact est suffisante à la fois pour permettre un bon amortissement acoustique et garantir une adhérence durable du profilé sur la feuille de verre, et en même temps réduite afin de permettre un gain de place sur la feuille de verre. La surface de profilé 2 solidarisée avec la feuille de verre 10 est plus préférentiellement d'environ 70%, ce qui permet un bon compromis entre les critères en compétition (gain de place, amortissement acoustique et adhérence).

Le profilé 2 ne forme pas un joint d'étanchéité. Il est de préférence agencé le long d'un seul côté du vitrage. De plus, il s'étend de préférence au plus sur la longueur du vitrage. Ainsi, il ne gêne pas le coulissement éventuel du vitrage dans les rails d'un lève-vitre.

Le profilé 2 comporte en outre au moins un élément 20 en matériau amortissant. Dans le mode de réalisation des figures 1 et 2, le profilé comporte un seul élément 20 en matériau amortissant.

L'élément en matériau amortissant 20 présente un facteur de perte supérieur à 0,2 et un module d'Young supérieur à 800 MPa, à 20°C et avantageusement pour une fréquence particulière *ƒₚ* du vitrage qui correspond à la fréquence critique du vitrage, ou à plus ou moins 30 % près de cette fréquence critique.

Le matériau amortissant est par exemple un bitumineux ou un polymère carboné chargé.

Le module d'Young du matériau amortissant et son facteur de perte sont mesurés à l'aide d'un visco-analyseur.

De manière connue, la fréquence critique *ƒ_{c}* d'un vitrage est donnée par la relation *ƒ_{c}≈11,6*/*h,* avec h l'épaisseur du vitrage en m. Typiquement, la fréquence critique d'un vitrage est ainsi comprise entre 2000 Hz et 5000 Hz selon, en particulier, l'épaisseur du vitrage.

En effet, il se trouve que pour les vitrages mobiles des véhicules, en particulier des véhicules automobiles, la plage de fréquences pour laquelle on souhaite obtenir un isolement amélioré correspond à la plage de fréquences située autour de la fréquence critique du vitrage. On choisira donc avantageusement une fréquence particulière *ƒₚ* égale, à plus ou moins 30% près, à la fréquence critique *ƒ_{c}* du vitrage (*ƒₚ =ƒ_{c}* ±30%). C'est en effet autour de cette fréquence critique que la transmission des bruits depuis l'extérieur du véhicule, au travers du vitrage, est la plus marquée, se traduisant en termes de mesures par une chute prononcée de l'isolement acoustique. Les caractéristiques du matériau amortissant permettent donc d'améliorer plus particulièrement l'amortissement vibro-acoustique du vitrage. Ainsi, la fréquence particulière *ƒₚ* pourra plus particulièrement correspondre à la fréquence critique du vitrage.

Ainsi, le vitrage fournit des propriétés d'amortissement vibro-acoustique, quelle que soit son association avec la carrosserie du véhicule et indépendamment de la carrosserie ; le matériau amortissant joue pleinement son rôle de dissipateur de l'énergie vibratoire, mais au lieu de travailler en traction-compression dans un plan normal au vitrage, le profilé travaille en traction-compression dans le plan du vitrage. Ce travail en traction-compression dans le plan du vitrage, qu'on préfère plutôt nommer travail en élongation, s'avère être étonnamment efficace.

Les inventeurs ont ainsi mis en évidence que l'association d'un profilé avec un vitrage pour dissiper l'énergie vibratoire est d'autant plus efficace que le matériau du profilé est amortissant (ce qui est lié au facteur de perte) et surtout que le profilé est rigide (ce qui est lié au module d'Young du ou des matériaux constituant le profilé) pour assurer un travail en élongation.

Pour exemple, selon la figure 1, on pourra fixer sur une feuille de verre de 3,85 mm d'épaisseur avec des dimensions de 800 mm x 500 mm, un profilé présentant une longueur L1 de 600 mm et une largeur L2 de 100 mm, ainsi qu'une épaisseur e de 5 mm. De préférence, seuls 70 % de la largeur L2 sont solidarisés sur la feuille de verre 10. Le reste de la largeur du profilé (30 mm) dépasse de la feuille de verre.

L'élément amortissant 20 comprend une face 21 de solidarisation avec l'une des faces 11 du de la feuille de verre et une face opposée 22 libre.

La solidarisation avec la feuille de verre est réalisée par des moyens adhésifs compatibles avec chacun des matériaux constitutifs de l'élément amortissant et du verre. Les moyens adhésifs sont de type connu, par exemple des moyens auto-adhésifs ou constitués d'une colle activée par apport thermique. Par exemple, le profilé comprend, sur sa face faisant face à la feuille de verre, des moyens de collage du type adhésif double-face. Les moyens adhésifs sont de préférence uniquement sur la partie de la face du profilé qui est en contact avec la feuille de verre. En variante, pour des raisons de simplicité de fabrication, les moyens adhésifs sont sur toute la surface de la face du profilé qui fait face à la feuille de verre, et un film non adhésif est appliqué sur la partie de la face du profilé qui fait face à la feuille de verre et qui n'est pas en contact avec cette dernière de façon à éviter tout collage non désiré.

La figure 3 représente une vue en coupe d'une variante de réalisation. Dans cette variante, le profilé n'est pas parallélépipédique. Il comporte des échancrures sur le pourtour de sa face faisant face à la feuille de verre. Cette forme de profilé en T permet d'améliorer sensiblement l'amortissement acoustique.

La figure 4 représente une vue en coupe d'une deuxième variante de réalisation. Le profilé 2 comprend une pluralité d'éléments amortissants 20, 23, 24.

Il a été remarqué que plus l'épaisseur e du profité 2 est grande, plus l'amortissement est efficace. Ainsi, au lieu de fabriquer un élément amortissant avec une épaisseur plus importante, il est plus facile de fabriquer plusieurs éléments amortissants de moindre épaisseur et de les superposer. Cela permet d'augmenter l'épaisseur totale du profilé 2 et ainsi d'améliorer l'amortissement. Notons toutefois que l'épaisseur totale du profilé 2 est limitée par les contraintes de place à l'intérieur de la carrosserie du véhicule.

Chaque matériau de chaque élément amortissant 20, 23, 24 présente un facteur de perte supérieur à 0,2, et un module d'Young supérieur à 800 MPa, à 20°C et à une fréquence particulière *ƒₚ* du vitrage qui correspond à la fréquence critique du vitrage à plus ou moins 30 % près.

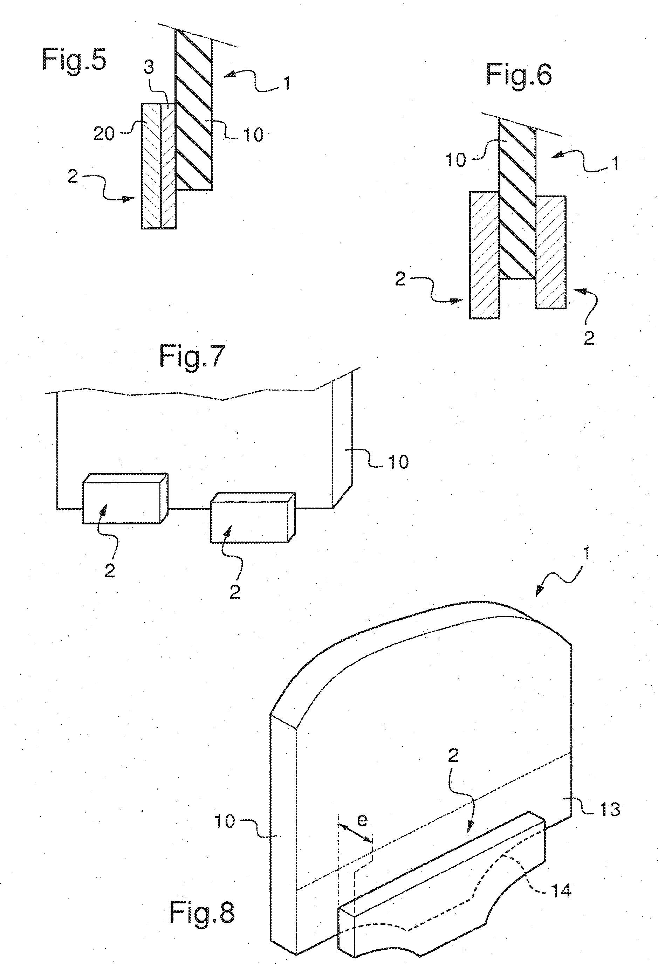

La figure 5 représente une vue en coupe d'une troisième variante de réalisation. Le profilé 2 comprend un élément amortissant 20 et un élément intercalaire rigide non amortissant 3, l'élément intercalaire rigide non amortissant 3 étant pris en sandwich entre l'élément amortissant 20 et la feuille de verre.

L'élément rigide non amortissant 3 est constitué d'un matériau qui présente un facteur de perte inférieur à 0,2 et un module d'Young supérieur à 1600 MPa. L'élément rigide non amortissant 3 est par exemple en verre ou en polycarbonate. L'élément rigide non amortissant 3 a par exemple une épaisseur de 3 mm. Les moyens de solidarisation entre les différents éléments sont adaptés pour être compatibles avec les matériaux constitutifs desdits éléments.

La figure 6 représente une vue en coupe d'une quatrième variante de réalisation. A la feuille de verre 10 sont associés deux profilés 2, avec un profilé respectivement sur chaque face 11 et 12 de la feuille de verre 10. Cela permet d'augmenter l'amortissement par rapport à un profilé sur une seule face. De plus, l'épaisseur du profilé est limitée par les dimensions de l'espace dans lequel il doit être logé dans la carrosserie d'un véhicule. Répartir l'épaisseur de chaque côté de la feuille de verre peut ainsi permettre un meilleur amortissement.

La figure 7 représente une vue en perspective d'une cinquième variante de réalisation. Le vitrage comprend, sur une même face de la feuille de verre, une pluralité (au moins deux) de profilés 2, qui peuvent être juxtaposés ou non, aboutés ou non. Cela permet de fabriquer des petits profilés et de les répartir comme souhaité sur la feuille de verre, par exemple pour moduler la disposition de l'épaisseur du vitrage comprenant le profilé en fonction de la place dans la carrosserie du véhicule destiné à accueillir le vitrage. Sur la figure 7, deux profilés 2 sont solidarisés à la feuille de verre 10. La surface de profilé en contact avec la feuille de verre diffère entre les deux profilés.

La figure 8 représente une vue en perspective d'une sixième variante de réalisation. Le profilé a une géométrie adaptée à la forme de la feuille de verre. En particulier, le profilé a une forme adaptée à celle de l'extrémité basse 14 de la bande basse 13 du vitrage, qui n'est ici pas rectiligne mais comprend des découpes.

Le profilé peut ainsi avoir une forme par exemple en trapèze.

Les différents modes de réalisation des figures 1 à 8 peuvent tous être combinés.

Dans l'ensemble de ces modes de réalisation, le profilé n'est associé à aucun autre dispositif à l'opposé de la feuille de verre.

Par ailleurs, l'invention concerne également un procédé de fabrication d'un vitrage selon l'invention, en vue de la réduction de la gêne acoustique et vibratoire dans un habitacle de véhicule, notamment de véhicule automobile, comportant un tel vitrage, le procédé comprenant les étapes suivantes :
- la fourniture d'un vitrage comprenant au moins une feuille de verre ;
- la fourniture d'au moins un profilé d'amortissement vibro-acoustique comprenant au moins un élément en matériau amortissant ;
- la solidarisation du profilé à au moins l'une des faces du vitrage de façon à ce que la face du profilé d'amortissement vibro-acoustique faisant face à la feuille de verre ait une surface en contact avec la feuille de verre qui est strictement inférieure à la surface de ladite face du profilé faisant face à la feuille de verre.

Ce procédé de fabrication permet d'obtenir un vitrage permettant d'amortir les bruits tout en prenant peu de place.

L'invention concerne également un procédé de protection acoustique dans un habitacle de véhicule, notamment de véhicule automobile, comprenant l'étape suivante :
- le montage, dans la carrosserie du véhicule, d'un vitrage à propriété d'amortissement vibro-acoustique amélioré, comprenant au moins une feuille de verre et au moins un profilé d'amortissement vibro-acoustique, le profilé comportant au moins un élément en matériau amortissant et le profilé étant solidarisé à l'une des faces du vitrage, la face du profilé faisant face à la feuille de verre ayant une surface en contact avec la feuille de verre qui est strictement inférieure à la surface de ladite face du profilé faisant face à la feuille de verre.

Ainsi, le véhicule équipé du vitrage selon l'invention bénéficie d'un dispositif d'amortissement des bruits peu encombrant.

A titre d'exemples nullement limitatifs, le tableau ci-dessous cite plusieurs matériaux amortissants pour le profilé du vitrage selon l'invention, le facteur de perte et le module d'Young sont donnés à 20°C et à la fréquence de 3100 Hz (fréquence critique d'un vitrage de 3,85 mm d'épaisseur), ces valeurs étant mesurées à l'aide d'un visco-analyseur :

| Nom commercial | Type de matériau | Module d'Young *E'ᵥ* (MPa) | Facteur de perte *tan δ* |
|---|---|---|---|
| Stickson de la société Akdev Soprema | Bitumineux | 900 | 0,38 |
| Sonit BS100 de la société Aksys | Bitumineux | 2900 | 0,37 |
| IK9709 de la société Rieter Automotive | Bitumineux | 1700 | 0,43 |
| ISODAMP C1100-12 de la société EARsc | Polymère à base vinylique | 900 | 0,35 |

Pour démontrer l'efficacité des moyens amortissants de l'invention, on a mis en évidence l'atténuation du niveau vibratoire d'un vitrage, muni des moyens amortissants par rapport au même vitrage, nu, sur une gamme de fréquences de 200 à 6300 Hz comprenant la fréquence critique du vitrage à 3700Hz.

Un vitrage muni des moyens amortissants de l'invention excité par voie aérienne présente des niveaux vibratoires inférieurs au vitrage nu car l'énergie vibratoire du vitrage est dissipée au travers du profilé 2. Dès lors, les niveaux de pression dans l'habitacle sont plus faibles, et en conséquence les bruits sont atténuées.

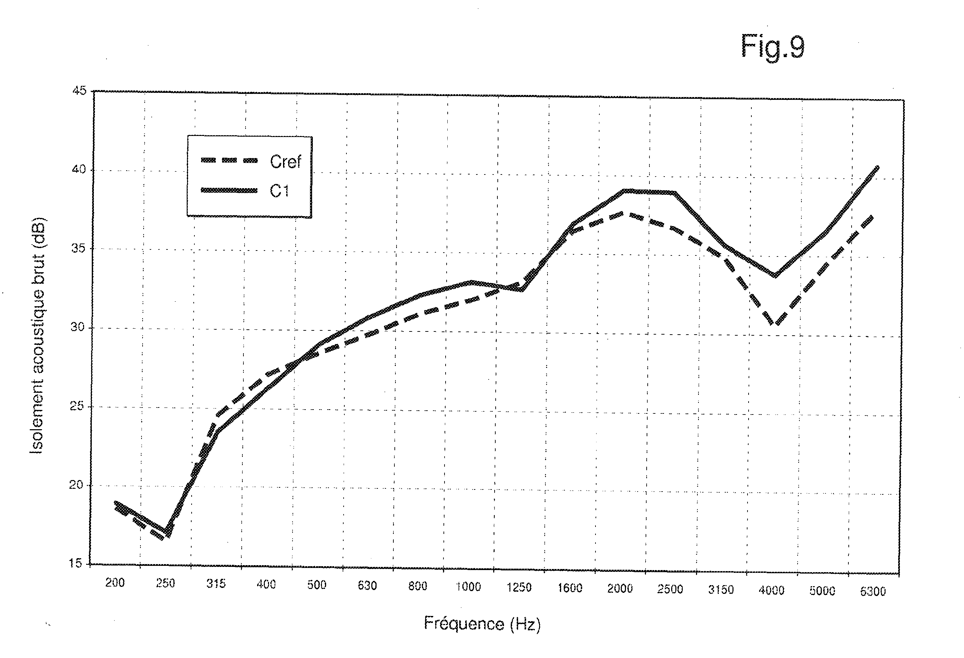

La figure 9 montre ainsi des courbes comparatives d'isolement acoustique brut obtenues avec d'une part, un vitrage pourvu des moyens amortissants de l'invention, et d'autre part, un vitrage équivalent ne comportant pas les moyens de l'invention.

Le vitrage servant de test est un vitrage mobile de porte avant de Mégane Il (Renault SA) d'épaisseur 3,15 mm et de surface 0,39 m². Sa fréquence critique avoisine ainsi les 3700 Hz.

La courbe Cref correspond au vitrage nu. La courbe C1 correspond au vitrage pourvu du profilé 2. Le profilé est parallélépipédique et a pour dimensions : longueur L1 de 600 mm, largeur L2 de 50 mm, et épaisseur e de 5,4 mm. Le matériau du profilé est une bande de IK9709 de la société Rieter Automotive (cf. tableau ci-dessus). Ce profilé est vendu dans le commerce avec une bande d'adhésif double-face pré-appliquée et compatible avec le verre pour son collage.

Le profilé est solidarisé à la feuille de verre sur 70% de sa surface. Les 30% restants de la surface sont munis d'un film non adhésif.

Ce vitrage est installé sur une porte avant-droite d'un véhicule de type Mégane Il dont les autres vitrages ont été masqués à l'aide de septum. L'isolement brut par tiers d'octave a ainsi été mesuré pour les fréquences allant de 200 à 6300 Hz. Ces mesures sont réalisées à la température ambiante de 18°C.

On met en évidence en regard des courbes de la figure 9 qu'on arrive à améliorer l'isolement acoustique brut du vitrage au niveau de la fréquence critique (écart de 3,2 dB sur le tiers d'octave centré sur 4000 Hz).

Par conséquent, si conformément au but premier de l'invention, on parvient à dissiper un maximum d'énergie vibratoire dans la région de la fréquence critique du vitrage (sur une plage s'étalant de moins 30% à plus 30% de la fréquence critique), l'invention permet également d'assurer un bon amortissement vibro-acoustique sur une plus large gamme de fréquences, y compris aux moyennes fréquences. On voit en effet sur la figure 9 que la courbe C1 d'isolement relative au vitrage de l'invention est au-dessus de la courbe Cref correspondant au vitrage nu au-delà de 500 Hz.

Par ailleurs, l'invention permet également de réduire la masse totale du vitrage en diminuant l'épaisseur de la ou des feuilles de verre sans dégrader ses performances acoustiques. Par exemple, la réduction de l'épaisseur de verre de 3,85 mm à 3,15 mm permet de réduire de 18% la masse de verre. L'adjonction d'un profilé ayant un élément en matériau amortissant présentant un facteur de perte supérieur à 0,2 et un module d'Young supérieur à 800 MPa, à 20°C pour une fréquence particulière *ƒₚ* correspondant à la fréquence critique du vitrage à plus ou moins 30 % près, permet, en ajoutant seulement 8% de masse, de compenser la dégradation acoustique liée à la réduction d'épaisseur. Un gain de 10% sur la masse totale du vitrage peut ainsi être obtenu pour des performances acoustiques équivalentes

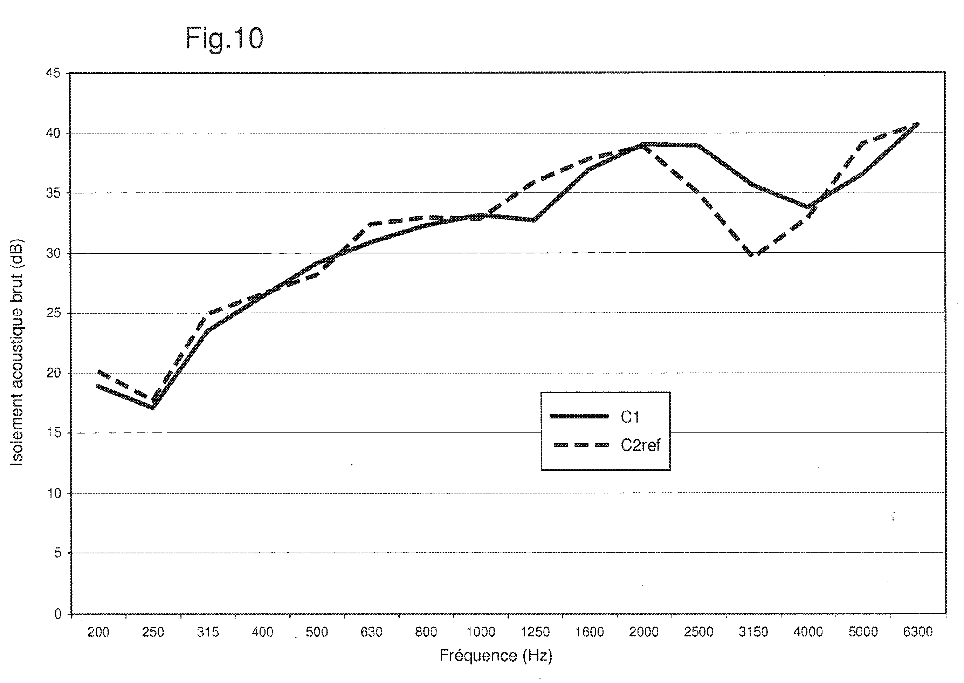

La figure 10 montre des courbes comparatives d'isolement acoustique brut entre un vitrage nu de 3,85 mm d'épaisseur et un vitrage selon l'invention, avec 3,15 mm d'épaisseur de verre, pourvu d'un profilé.

Le vitrage servant de test est un vitrage mobile de porte avant de Mégane Il (Renault SA) de surface 0,39 m².

La courbe C2ref correspond au vitrage nu d'épaisseur 3,85 mm. Sa fréquence critique avoisine ainsi les 3150 Hz.

La courbe C1 correspond au vitrage selon l'invention, avec une épaisseur de 3,15 mm de verre et un profilé 2. La fréquence critique du vitrage selon l'invention avoisine ainsi les 4000 Hz. La courbe C1 est identique à la courbe C1 de la figure 9. Le profilé est parallélépipédique de dimensions : longueur L1 de 600 mm, largeur L2 de 50 mm, et épaisseur e de 5,4 mm. Le matériau du profilé est une bande de IK9709 de la société Rieter Automotive (cf. tableau ci-dessus). Ce profilé est vendu dans le commerce avec une bande d'adhésif double-face pré-appliquée et compatible avec le verre pour son collage.

Le profilé est solidarisé à la feuille de verre sur 70% de sa surface. Les 30% restants de la surface sont munis d'un film non adhésif.

Ce vitrage est installé sur une porte avant-droite d'un véhicule de type Mégane Il dont les autres vitrages ont été masqués à l'aide de septum. L'isolement brut par tiers d'octave a ainsi été mesuré pour les fréquences allant de 200 à 6300 Hz. Ces mesures sont réalisées à la température ambiante de 18°C.

On met en évidence en regard des courbes de la figure 10 qu'on arrive à améliorer l'isolement acoustique du vitrage au niveau de la fréquence critique (écart de 4,1 dB sur le tiers d'octave centré sur les fréquences critiques).

## Revendications

1. Vitrage (1) à propriété d'amortissement vibro-acoustique amélioré, comprenant :
- au moins une feuille de verre (10),
- au moins un profilé (2) d'amortissement vibro-acoustique, le profilé comprenant au moins un élément en matériau amortissant (20) et le profilé (2) étant solidarisé avec une des faces de la feuille de verre, **caractérisé en ce que** la face du profilé (2) faisant face à la feuille de verre (10) ayant une surface en contact avec la feuille de verre est strictement inférieure à la surface de ladite face du profilé faisant face à la feuille de verre, et dans lequel le profilé (2) s'étend sur au plus la longueur du vitrage.

2. Vitrage selon la revendication 1, dans lequel la surface de profilé (2) en contact avec la feuille de verre est supérieure ou égale à 25 % de la surface de la face de profilé faisant face à la feuille de verre.

3. Vitrage selon la revendication 2, dans lequel la surface de profilé (2) en contact avec la feuille de verre est égale à environ 70%.

4. Vitrage selon l'une quelconque des revendications 1 à 3, dans lequel l'élément en matériau amortissant présente un facteur de perte supérieur à 0,2 et un module d'Young supérieur à 800 MPa, à 20°C pour une fréquence particuliére fp correspondant à la fréquence critique du vitrage à plus ou moins 30 % près.

5. Vitrage selon l'une quelconque des revendications 1 à 4, dans lequel le profilé (2) n'est associé à aucun autre dispositif à l'opposé de la feuille de verre.

6. Vitrage selon l'une quelconque des revendications 1 à 5, dans lequel le profilé (2) comporte une pluralité d'éléments en matériau amortissant (20, 23, 24).

7. Vitrage selon l'une quelconque des revendications 1 à 6, comprenant plusieurs profilés (2) associés à la même face du vitrage et/ou à deux faces opposées du vitrage.

8. Vitrage selon l'une quelconque des revendications 1 à 7, dans lequel le profilé (2) comporte au moins un élément en matériau amortissant (20), et un élément intercalaire (3) rigide qui est agencé entre l'élément en matériau amortissant (20) et la feuille de verre (10), l'élement intercalaire rigide présentant un facteur de perte inférieur à 0,2 et un module d'Young supérieur à 1600 MPa, à 20°C pour la fréquence particulière choisie fp.

9. Vitrage selon l'une quelconque des revendications 1 à 8, dans lequel le profilé comprend, sur sa face faisant face à la feuille de verre, des moyens de collage du type adhésif double-face.

10. Véhicule, notamment véhicule automobile, comprenant une carrosserie et un vitrage selon l'une quelconque des revendications 1 à 9, le profilé (2) étant caché à la vue dans la carrosserie.

11. Véhicule selon la revendication 10, dans lequel le vitrage est un vitrage latéral ouvrant.

12. Procédé de fabrication d'un vitrage (1) selon l'une quelconque des revendications 1 à 9, en vue de la réduction de la gêne acoustique et vibratoire dans un habitacle de véhicule, notamment de véhicule automobile, comportant un tel vitrage, le procédé comprenant les étapes suivantes :
- la fourniture d'un vitrage comprenant au moins une feuille de verre (10) ;
- la fourniture d'au moins un profilé (2) d'amortissement vibro-acoustique comprenant au moins un élément en matériau amortissant ;
- la solidarisation du profilé (2) (i) sur au plus la longueur dudit vitrage et (ii) à au moins l'une des faces dudit vitrage de façon à ce que la face du profilé d'amortissement vibro-acoustique (2) faisant face à la feuille de verre ait une surface en contact avec la feuille de verre qui est strictement inférieure à la surface de ladite face du profilé faisant face à la feuille de verre.

## Patentansprüche

1. Verglasung (1) mit verbessertem vibro-akustischem Dämpfungsvermögen, umfassend:
- mindestens eine Glasscheibe (10),
- mindestens ein vibro-akustisches Dämpfungsprofil (2), wobei das Profil mindestens ein Element aus Dämpfungsmaterial (20) umfasst und wobei das Profil (2) mit einer der Seiten der Glasscheibe fest verbunden ist, **dadurch gekennzeichnet, dass** die Seite des Profils (2), die der Glasscheibe (10) zugewandt ist und eine Oberfläche in Kontakt mit der Glasscheibe hat, strikt kleiner ist als die Oberfläche der Seite des Profils, die der Glasscheibe zugewandt ist, und wobei das Profil (2) sich über höchstens die Länge der Verglasung erstreckt.

2. Verglasung nach Anspruch 1, wobei die Oberfläche des Profils (2) in Kontakt mit der Glasscheibe größer oder gleich 25 % der Oberfläche der Seite des Profils ist, die der Glasscheibe zugewandt ist.

3. Verglasung nach Anspruch 2, wobei die Oberfläche des Profils (2) in Kontakt mit der Glasscheibe gleich etwa 70 % ist.

4. Verglasung nach einem der Ansprüche 1 bis 3, wobei das Element aus Dämpfungsmaterial einen Verlustfaktor von mehr als 0,2 und einen Young-Modul von mehr als 800 MPa bei 20 °C bei einer speziellen Frequenz *ƒₚ* aufweist, die der kritischen Frequenz der Verglasung zu mehr oder weniger 30 % entspricht.

5. Verglasung nach einem der Ansprüche 1 bis 4, wobei das Profil (2) keiner anderen Vorrichtung zugeordnet ist, die zu der Glasscheibe entgegengesetzt ist.

6. Verglasung nach einem der Ansprüche 1 bis 5, wobei das Profil (2) eine Vielzahl von Elementen aus Dämpfungsmaterial (20, 23, 24) aufweist.

7. Verglasung nach einem der Ansprüche 1 bis 6, umfassend mehrere Profile (2), die der gleichen Seite der Verglasung und/oder zwei entgegengesetzten Seiten der Verglasung zugeordnet sind.

8. Verglasung nach einem der Ansprüche 1 bis 7, wobei das Profil (2) mindestens ein Element aus Dämpfungsmaterial (20) und ein starres Zwischenelement (3) aufweist, das zwischen dem Element aus Dämpfungsmaterial (20) und der Glasscheibe (10) vorgesehen ist, wobei das Zwischenelement einen Verlustfaktor kleiner als 0,2 und einen Young-Modul von mehr als 1600 MPa bei 20 °C bei der gewählten speziellen Frequenz *ƒₚ* aufweist.

9. Verglasung nach einem der Ansprüche 1 bis 8, wobei das Profil auf seiner Seite, die der Glasscheibe zugewandt ist, Klebemittel des Typs doppelseitiges Klebeband umfasst.

10. Fahrzeug, insbesondere Kraftfahrzeug, umfassend eine Karosserie und eine Verglasung nach einem der Ansprüche 1 bis 9, wobei das Profil (2) in der Karosserie von der Sicht verborgen ist.

11. Fahrzeug nach Anspruch 10, wobei die Verglasung eine bewegliche Seitenverglasung ist.

12. Verfahren zum Herstellen einer Verglasung (1) nach einem der Ansprüche 1 bis 9 zur Verringerung der Lärm- und Vibrationsbelästigung in einem Fahrgastinnenraum eines Fahrzeugs, insbesondere eines Kraftfahrzeugs, mit einer derartigen Verglasung, wobei das Verfahren die folgenden Schritte umfasst:
- Bereitstellen einer Verglasung, die mindestens eine Glasscheibe (10) umfasst;
- Bereitstellen mindestens eines vibro-akustischen Dämpfungsprofils (2), das mindestens ein Element aus Dämpfungsmaterial umfasst;
- festes Verbinden des Profils (2) (i) höchstens über die Länge der Verglasung und (ii) an mindestens einer der Seiten der Verglasung, so dass die Seite des vibroakustischen Dämpfungsprofils (2), die der Glasscheibe zugewandt ist, eine Oberfläche in Kontakt mit der Glasscheibe hat, die strikt kleiner ist als die Oberfläche der Seite des Profils, die der Glasscheibe zugewandt ist.

## Claims

1. A glazing unit (1) having improved vibroacoustic damping properties comprising:
- at least one glass sheet (10);
- at least one vibroacoustic damping strip (2), the strip comprising at least one element (20) made of damping material and the strip (2) being fastened to one of the faces of the glass sheet;
the face of the strip (2) facing the glass sheet (10) having a surface area in contact with the glass sheet which is strictly inferior to the surface area of said face of the strip facing the glass sheet, and in which the strip (2) extends over at most the length of the glazing unit.

2. The glazing unit as claimed in claim 1, in which the surface area of the strip (2) in contact with the glass sheet is greater than or equal to 25% of the surface area of the face of the strip facing the glass sheet.

3. The glazing unit as claimed in claim 2, in which the surface area of the strip (2) in contact with the glass sheet is equal to around 70%.

4. The glazing unit as claimed in any one of claims 1 to 3, in which the element made of damping material has a loss factor greater than 0.2 and a Young's modulus greater than 800 MPa, at 20°C for a particular frequency *fₚ* corresponding to the critical frequency of the glazing unit to within plus or minus 30%.

5. The glazing unit as claimed in one of claims 1 to 4, in which the strip (2) is not joined to any other device on the opposite side of the glass sheet.

6. The glazing unit as claimed in any one of claims 1 to 5, in which the strip (2) comprises a plurality of elements (20, 23, 24) made of damping material.

7. The glazing unit as claimed in any one of claims 1 to 6, comprising several strips (2) joined to the same face of the glazing unit and/or to two opposite faces of the glazing unit.

8. The glazing unit as claimed in any one of claims 1 to 7, in which the strip (2) comprises at least one element (20) made of damping material and a rigid interlayer element (3) that is arranged between the element (20) made of damping material and the glass sheet (10), the rigid interlayer element having a loss factor of less than 0.2 and a Young's modulus greater than 1600 MPa at 20°C for the particular frequency chosen *fₚ*.

9. The glazing unit as claimed in any one of claims 1 to 8, in which the strip comprises, on its face facing the glass sheet, bonding means of the double-sided adhesive type.

10. A vehicle, in particular an automobile, comprising a body and a glazing unit as claimed in any one of claims 1 to 9, the strip (2) being hidden from view in the body.

11. The vehicle as claimed in claim 10, in which the glazing unit is an opening side glazing unit.

12. A method of manufacturing a glazing unit (1) as claimed in any one of claims 1 to 9, for the purpose of reducing acoustic and vibratory nuisance in a passenger compartment of a vehicle, especially an automobile, comprising such a glazing unit, the method comprising the following steps:
- providing a glazing unit comprising at least one glass sheet (10);
- providing at least one vibroacoustic damping strip (2) comprising at least one element made of damping material;
- fastening the strip (2) (i) over at most the length of the glazing unit and (ii) to at least one of the faces of the glazing unit so that the face of the vibroacoustic damping strip (2) facing the glass sheet has a surface area in contact with the glass sheet which is strictly inferior to the surface area of said face of the strip facing the glass sheet.
